# EUROPÄISCHE PATENTSCHRIFT

(11) **EP 3 322 285 B1**
(45) Veröffentlichungstag und Bekanntmachung des Hinweises auf die Patenterteilung: **02.09.2020**
(21) Anmeldenummer: 16738411.4
(22) Anmeldetag: 12.07.2016
(51) Int. Cl.: A01J 5/04, A01J 5/06, A01J 5/08

(54) **ZITZENGUMMI MIT FLEXIBLER KOPFGEOMETRIE**
RUBBER TEAT LINER WITH FLEXIBLE HEAD GEOMETRY
MANCHON POUR TRAYON À GÉOMÉTRIE DE TÊTE FLEXIBLE

(30) Priorität: 15.07.2015 DE 102015111476
(43) Veröffentlichungstag der Anmeldung: 23.05.2018
(73) Patentinhaber: GEA Farm Technologies GmbH, 59199 Bönen (DE)
(72) Erfinder: GRÜTER, Thomas, 59556 Lippstadt (DE); SCHÜRMANN, Benedikt, 48301 Nottuln (DE)
(74) Vertreter: Keenway Patentanwälte Neumann Heine Taruttis
(86) Internationale Anmeldenummer: PCT/EP2016/066479
(87) Internationale Veröffentlichungsnummer: WO 2017/009314

(56) Entgegenhaltungen:
- GB-A- 284 236
- US-A- 3 696 790

## Beschreibung

Der Gegenstand der Erfindung betrifft ein Zitzengummi, einen Melkbecher mit einem entsprechenden Zitzengummi sowie ein Melkzeug umfassend mindestens zwei Melkbecher und mindestens ein entsprechendes Zitzengummi.

Zum maschinellen Melken eines Tieres, insbesondere einer Kuh, wird ein Melkzeug verwendet, das mehrere Melkbecher aufweist. Die Melkbecher sind in der Regel über kurze Milchschläuche mit einem Milchsammelstück verbunden. Von dem Milchsammelstück wird die abgemolkene Milch in einen Milchtank geleitet. Eine solche Anordnung ist jedoch nicht zwingend, weil der Melkbecher auch unmittelbar, das heißt ohne Zwischenschaltung eines Milchsammelstücks, über einen Milchschlauch mit einer Milchleitung des Melksystems verbunden sein kann.

Ein Melkbecher umfasst eine Melkbecherhülse, in der ein Zitzengummi angeordnet ist. Es sind unterschiedliche Ausgestaltungen eines Zitzengummis bekannt. So beschreibt bspw. die EP 0 477 950 A1 ein Zitzengummi mit einem Kopfteil, an dem eine Dichtlippe vorgesehen ist, die eine Einführöffnung für die Zitze begrenzt. Das Kopfteil ist mit einem Schaftteil verbunden.

Durch US 3,696,790 A ist ein Zitzengummi mit einem Kopfteil und einem mit dem Kopfteil verbundenen Schaftteil bekannt. Das Kopfteil hat eine Einführöffnung für eine Zitze eines Tiers, wobei die Einführöffnung durch eine nach innen weisende Lippe begrenzt ist. Die Lippe ist im Querschnitt wellenförmig ausgebildet. Die Wellen sind spiralförmig angeordnet und mit Erweiterungen versehen.

Es ist bekannt, dass es beim Melken eines Tieres, insbesondere einer Kuh, nicht zu einem Einschnüren der Zitze durch das Zitzengummi kommen darf. Insbesondere am Ende eines Melkvorgangs kann es zu einem unerwünschten Klettern des Melkbechers an der Zitze kommen. In dem Bereich des Fürstenbergischen Venenrings am Übergang von der Zitze zum Euterboden befinden sich zahlreiche Blut- und Lymphgefäße. Dieser Bereich ist relativ empfindlich, so dass es durch einen hochkletternden Melkbecher zu einem Abschnüren der Blut- und Lymphgefäße kommen kann. Dies führt zu einem Ausschütten von Adrenalin, was zu einem verringerten Milchfluss bzw. zu einer negativen Haltung des Tieres beim Melken führt. Um jedoch ein vollständiges Ausmelken des Euters zu erreichen, ist eine Nachmelkarbeit notwendig. Hierdurch bedingt kann es zu einer Verlängerung der Melkzeit kommen, welche Auswirkungen auf die Zitzenkonditionen haben kann.

Im Zusammenhang mit der vorliegenden Erfindung ist ein besonderes Augenmerk auf den Beginn des Melkvorgangs gerichtet. Hier besteht das Problem, dass die Anatomie und Größe der Zitzen mehrerer Tiere und auch eines Tieres sehr unterschiedlich sein können. Zudem können die Zitzen eines Tieres unter unterschiedlichen Winkeln vom Euter abstehen und unterschiedliche Abstände zueinander aufweisen. Die bekannten Zitzengummis bieten jedoch keine ausreichende Anpassbarkeit an die unterschiedlichen Zitzengeometrien. Zudem kann es zu Melkbeginn, aufgrund notwendiger Ausrichtungen der Zitzengummis oder der Auswahl unterschiedlicher Zitzengummis, zu zeitlichen Verzögerungen im Melkprozess kommen.

Eine mögliche Lösung der vorgenannten Probleme wird in der EP 1 954 120 B1 vorgeschlagen. Hier ist ein Bereich zwischen dem Kopfteil und dem Schaftteil vorgesehen, der eine Relativbewegung zwischen dem Kopfteil und dem Schaftteil ermöglicht. Ein solcher Bereich kann bspw. in der Form eines Gelenks ausgebildet sein. Wenn die Zitzen eines Tieres unter unterschiedlichen Winkeln vom Euter abstehen, kann durch die Relativbewegung zwischen dem Kopfteil und dem Schaftteil eine Anpassung an die Anatomie des Tieres ermöglicht werden. Eine solche Ausführungsform ist in der Herstellung relativ aufwendig und löst noch nicht die Probleme, welche nachfolgend im Zusammenhang mit besonders kleinen und dünnen Zitzen beschrieben werden.

Die Kopfaußenkontur eines bekannten Zitzengummis, insbesondere der Mantel des Kopfes, weist in der Regel eine zylindrische oder konische Außenfläche mit einem im Wesentlichen konstanten Durchmesser auf. Gleiches gilt für die Innenkontur an dieser Stelle. Je nach Wandstärke in diesem Bereich, insbesondere je nach Mantelstärke, ist der Kopf mehr oder weniger flexibel bzw. mehr oder weniger stabil.

Zu Melkbeginn wird eine Zitze durch die Einführöffnung in das Zitzengummi eingeführt. Dabei rollt sich die Lippe des Zitzengummis ein und passt sich der Zitze an. Eine derartige Anpassung funktioniert mit bekannten Zitzengummis nur für eine kleine Bandbreite von Zitzengeometrien.

Es stellt sich zunehmend das Problem, dass die Zitzen, insbesondere von Kühen, stets kleiner und dünner werden. Beim Einsatz bekannter Zitzengummis ergibt sich insbesondere bei kleinen und dünnen Zitzen das Problem, dass der Kopfaußendurchmesser dieser Zitzengummis für ein optimales Melkergebnis und insbesondere für eine ausreichende Haftung des Zitzengummis an der Zitze zu groß ist. In diesem Zusammenhang ist auch zu berücksichtigen, dass die Zitzen nicht nur genetisch gewollt kleiner und dünner werden, sondern auch - speziell die hinteren Zitzen - immer enger zusammen stehen. Wenn der Abstand so gering ist, dass die Zitzen sich berühren, spricht man auch von sog. "kissing teats". In Anbetracht dieser Entwicklungen ist es wünschenswert, den Kopfaußendurchmesser des Zitzengummis möglichst klein gestalten zu können.

Eine bloße Reduktion des Kopfaußendurchmessers ist jedoch problematisch, weil an den Kopf bzw. das Kopfteil eines Zitzengummis hohe Anforderungen in Bezug auf die Flexibilität und gleichzeitig die Stabilität gerichtet sind. Weist der Kopf eine zu geringe Flexibilität auf, so ist das Zitzengummi nicht ausreichend anpassbar an unterschiedliche Zitzengeometrien. Ist hingegen die Stabilität des Kopfs nicht ausreichend, so kann es beim Melken und einem dabei entstehenden Vakuum im Inneren des Kopfes zu einem Einfalten des Kopfbereichs bzw. des Mantels des Kopfteils kommen.

Hiervon ausgehend liegt der vorliegenden Erfindung die Aufgabe zugrunde, die im Zusammenhang mit dem Stand der Technik beschriebenen Probleme zumindest teilweise zu lösen. Hierzu soll ein Zitzengummi angegeben werden, das sich an unterschiedliche Zitzengeometrien anpassen kann und ein schonenderes und insbesondere schnelles Melken ermöglicht, insbesondere bei kleinen und dünnen Zitzen eines Tieres. Insbesondere soll auch ein Melkbecher und ein Melkzeug angegeben werden, die mit einem Zitzengummi ausgerüstet sind, das die im Zusammenhang mit dem Stand der Technik geschilderten Probleme zumindest teilweise löst.

Die Aufgaben werden gelöst durch ein Zitzengummi, einen Melkbecher und ein Melkzeug gemäß den jeweiligen unabhängigen Ansprüchen. Die jeweiligen abhängigen Ansprüche sind auf vorteilhafte Ausgestaltungen gerichtet. Es ist darauf hinzuweisen, dass die in den abhängigen Ansprüchen aufgeführten Merkmale in beliebiger, technologisch sinnvoller Weise, miteinander kombiniert werden können und weitere Ausführungsformen der Erfindung definieren. Darüber hinaus werden in den Ansprüchen angegebenen Merkmale in der Beschreibung näher präzisiert und erläutert, wobei weitere bevorzugte Ausgestaltungen der Erfindung dargestellt werden.

Das erfindungsgemäße Zitzengummi hat die Merkmale des Anspruchs 1.

Die vorliegende Erfindung ermöglicht in vorteilhafter Weise eine geringere Bauhöhe bzw. Kopfteillänge und einen geringeren Außendurchmesser des Kopfteils des Zitzengummis, bei gleichwohl guter Flexibilität und Stabilität des Zitzengummis beim Einführen der Zitze und beim Melken. Der Dehnungsbereich ermöglicht eine hohe Flexibilität und Dehnbarkeit, die für ein euterschonendes Melken notwendig sind. Darüber hinaus kann aufgrund der Flexibilität und der Dehnbarkeit des Kopfteils ein breites Spektrum an Zitzengeometrien mit einem Zitzengummi abgedeckt werden. Zudem ergibt sich eine verbesserte Leistungsfähigkeit beim Melken, weil das Zitzengummi sich schnell und einfach an unterschiedliche Winkel und Geometrien der Zitzen anpassen kann. Hieraus resultiert unter anderem eine Verkürzung der Melkzeit. Zugleich bietet das Zitzengummi ein verbessertes Haftverhalten, weil sich der Kopf des Zitzengummis besser an die unterschiedlichen Zitzengeometrien anpasst.

Die vorliegende Erfindung wendet sich insbesondere von einer Ausführungsvariante des Zitzengummis mit einem Gelenk zwischen dem Schaftteil und dem Kopfteil ab. Eine solche Ausführungsvariante wurde im Zusammenhang mit dem Stand der Technik beschrieben. Es ist jedoch möglich, das Prinzip der vorliegenden Erfindung mit einem Gelenk zwischen dem Kopfteil und dem Schaftteil zu kombinieren. Ein solches Gelenk sorgt insbesondere dafür, dass die gegen die eingeführten Zitzen ausgeübten Kräfte über einen weiten Bereich unterschiedlicher Zitzengeometrien konstant sind. Solche Gelenke sind im Zusammenhang mit der vorliegenden Erfindung nicht mehr zwingend erforderlich, weil der Dehnungsbereich des Kopfteils eine ausreichende Flexibilität und Anpassbarkeit an unterschiedliche Zitzengeometrien bietet.

Aufgrund dessen der Mantel des Kopfteils im Dehnungsbereich im Querschnitt wellenförmig gebildet ist, kann die Stabilität des Kopfteils erhöht werden, wodurch es möglich wird, die Wandstärke bzw. die Mantelstärke des Kopfteils zu verringern. Eine solche verringerte Mantelstärke hat wiederum den Vorteil, dass bei gleichbleibend guter Stabilität des Kopfteils die Flexibilität und die Elastizität, insbesondere die radiale Dehnbarkeit, des Kopfteils erhöht werden kann.

Durch eine verringerte Mantelstärke kann zudem ein Außenkopfdurchmesser gegenüber bekannten Zitzengummigeometrien ebenfalls verkleinert werden. Hierdurch ergibt sich insbesondere bei engstehenden Zitzen eines Tieres ein verbessertes Haftverhalten, weil die Zitzengummiköpfe sich während des Melkens nicht mehr gegenseitig berühren und/oder in ihrer Bewegung gegenseitig behindern. Die vorliegende Erfindung ermöglicht darüber hinaus, die Bauhöhe des Zitzengummikopfs, hier als Kopfteillänge bezeichnet, zu reduzieren. Dies ist besonders vorteilhaft im Zusammenhang mit kleineren und kürzeren Zitzen eines Tieres. Das hier vorgeschlagene Zitzengummi kann bei kleineren und kürzeren Zitzen zu einer besseren Massagewirkung führen, weil ein Abstand in Längsrichtung von der Einführöffnung zum Schaftteil kleiner ist und der Schaftteil somit kürzere Zitzen besser umschließen kann.

Es ist besonders vorteilhaft, dass sich das Kopfteil aufgrund des Dehnungsbereichs an die Zitzengeometrie anpassen kann, wenn die Zitze des Tieres eingeführt wird. Eine solche Anpassung zeigt sich insbesondere in einer Aufwölbung nach außen bzw. in einer radialen Dehnung des Mantels des Kopfteils. Der im Querschnitt wellenförmige Bereich des Mantels sorgt in vorteilhafter Weise für eine zusätzliche Materialbereitstellung, in der Art einer Ziehharmonika, eines Faltenbalgs oder dergleichen. Dies kann auch dadurch beschrieben werden, dass der Mantel im Bereich des wellenförmigen Querschnitts in einem abgewickelten Zustand in Umfangsrichtung betrachtet länger ist als in einem aufgewickelten Zustand.

Aufgrund der reduzierten Mantelstärke kann eine erhöhte Elastizität sowohl in radialer Richtung als auch in Längsrichtung erreicht werden. Eine erhöhte Elastizität des Kopfteils in Längsrichtung hat zudem den Vorteil, dass eine Kletterbewegung am Ende des Melkvorgangs gedämpft werden kann. Falls das Zitzengummi aufgrund eines Kletterns am Ende des Melkvorgangs gegen den Euterboden stößt, so kann die erhöhte Elastizität in Längsrichtung zu einer Dämpfung des Stoßes beitragen und dementsprechend einen Druck auf den Fürstenbergischen Venenring lindern.

Das Zitzengummi ist mit einem Kopfteil und einem mit dem Kopfteil verbundenen Schaftteil ausgeführt. Bevorzugt ist das Kopfteil mit dem Schaftteil einstückig gebildet. Das Kopfteil und das Schaftteil können in der Art eines Monoblocks hergestellt sein. Insbesondere sind das Kopfteil und das Schaftteil aus einem gleichen Material hergestellt. Dies ist jedoch nicht zwingend, weil das Kopfteil und das Schaftteil auch aus unterschiedlichen Materialien hegestellt sein kann. Bevorzugt ist das Kopfteil aus einem Material gebildet, welches gegenüber dem Material des Schaftteils weicher ist. Hierdurch wird erreicht, dass ein weiches Kopfteil ein noch besseres Anpassungsverhalten an die Zitze ermöglicht. Ein weiches Kopfteil hat darüber hinaus den Vorteil, dass es sich besser an Zitzen unterschiedlicher Dimension und Position am Euter anpassen kann. Ein härteres Schaftteil hat den Vorteil, dass bei gleichbleibendem Einfaltdruck die Wandstärke des Schaftteils abnehmen kann, was eine Materialeinsparung bewirkt. Darüber hinaus wird die mechanische Belastbarkeit des Schaftteils und somit auch die Lebensdauer des Zitzengummis erhöht. Das Zitzengummi kann hierzu mittels eines Zweikomponentenspritzverfahrens hergestellt werden. Die Herstellung kann simultan oder seriell bzw. nacheinander erfolgen.

Zumindest ein Teil des Zitzengummis ist vorzugsweise aus einem Kunststoff, einem Kunststoffgemisch, einem Gummi oder einem Silikon gebildet. Dies ermöglicht es, dass das Zitzengummi lebensmittelverträglich ausgeführt ist. Insbesondere ist zumindest teilweise ein thermoplastisches Elastomer (TPE) vorgesehen. Das Zitzengummi kann darüber hinaus mittels Spritzguss, Formpressen, Transferspritzen oder -pressen und/oder Vulkanisation bzw. Vernetzung hergestellt werden.

Ein Zitzengummi ist in der Regel ein im Wesentlichen rotationssymmetrischer Körper. Es ist jedoch nicht zwingend, dass alle Teilbereiche des Zitzengummis rotationssymmetrisch gebildet sind. So muss z. B. der Dehnungsbereich nicht rotationssymmetrisch sein. Die Rotationsachse definiert hier eine Längsachse des Zitzengummis. Der hier betrachtete Querschnitt des Mantels steht im Wesentlichen orthogonal bzw. senkrecht auf der Längsachse. Von der Längsachse aus weist eine radiale Richtung nach außen. Somit ergibt sich auch eine Umfangsrichtung in Bezug auf das Zitzengummi, welche in oder entgegen dem Uhrzeigersinn verstanden sein kann.

Der Mantel ist ein Teil des Kopfteils. Der Mantel ist ein im Wesentlichen rotationssymmetrischer Körper um die Längsachse des Zitzengummis. Der Mantel hat mindestens einen Dehnungsbereich, der nicht zwingend rotationssymmetrisch ist. Der Mantel hat einen Mantelumfang, der hier auch als mittlerer Umfang des Mantels verstanden sein kann. Das Kopfteil hat zudem eine Einführöffnung, durch die eine Zitze eines Tieres, insbesondere einer Kuh, in das Zitzengummi eingeführt werden kann. Die Einführöffnung ist insbesondere in radialer Richtung durch eine nach innen weisende Lippe begrenzt. Ist die Zitze eines Tieres in das Zitzengummi eingeführt, so kann ein Innenrand der Lippe an der Zitze anliegen.

Der Dehnungsbereich erstreckt sich über mindestens einen Teil des Mantelumfangs. Es ist somit nicht zwingend erforderlich, dass der Mantel in Umfangsrichtung betrachtet durchgehend mit dem Dehnungsbereich ausgeführt ist. Vielmehr kann der Mantelumfang in einzelne Umfangssegmente unterteilt sein, wobei ein Dehnungsbereich nicht in jedem Umfangssegment vorhanden sein muss. Ein Dehnungsbereich kann bspw. in jedem zweiten Umfangssegment vorhanden sein. Es können auch unterschiedliche Dehnungsbereiche in den Segmenten vorgesehen sein. Hierzu kann der Querschnitt des Mantels in den betreffenden Dehnungsbereichen bzw. Segmenten eine unterschiedliche Wellenform aufweisen. Zudem erstreckt sich der Dehnungsbereich über mindestens einen Teil der Kopfteillänge. Die Kopfteillänge ist hier auf die Längsachse bezogen. Der Dehnungsbereich beginnt erfindungsgemäß in Längsrichtung betrachtet vom Schaftteil ausgehend mit einem Abstand zum Schaftteil. Zudem endet erfindungsgemäß der Dehnungsbereich in Längsrichtung betrachtet mit einem Abstand zu der nach innen weisenden Lippe. In dem Dehnungsbereich kann der Mantel auch mit einem weicheren Material gebildet sein, im Vergleich zu dem Material des restlichen Kopfteils.

Der Mantel ist in dem Dehnungsbereich im Querschnitt wellenförmig gebildet. Unter wellenförmig ist hier insbesondere verstanden, dass in Umfangsrichtung betrachtet ein Innenradius des Mantels und/oder ein Außenradius des Mantels nicht konstant ist. Der wellenförmige Querschnitt ist insbesondere durch ein in Umfangsrichtung betrachtet abwechselndes Auftreten von Minima und Maxima einer Kontur des Mantels beschreibbar. Im Sinne der Erfindung sind unterschiedliche Wellenformen möglich. Es sind bogenförmige, insbesondere sinusförmige, oder eckige, insbesondere spitze, Wellenformen möglich.

Eine Wellenform kann auch mittels Vertiefungen auf einer Dehnungsbereichsaußenseite und/oder einer Dehnungsbereichsinnenseite gebildet sein. Solche Vertiefungen können insbesondere in einem Vertiefungsgrund bogenförmig oder eckig sein. Es ist auch möglich, einzelne Wellenformen miteinander zu kombinieren. Hier ist es z. B. möglich, dass im Querschnitt betrachtet eine Innenkontur des Mantels im Bereich des Dehnungsbereichsinnenumfangs im Wesentlichen glatt ausgeführt ist, also in Umfangsrichtung betrachtet einen konstanten Innenradius aufweist, und im Querschnitt betrachtet eine Außenkontur des Mantels im Bereich des Dehnungsbereichsaußenumfangs eine wellenförmige Kontur aufweist, so dass hier ein Außenradius des Mantels in Umfangsrichtung betrachtet nicht konstant ist. In umgekehrter Weise ist es auch möglich, dass im Querschnitt betrachtet eine Außenkontur des Mantels im Bereich des Dehnungsbereichsaußenumfangs im Wesentlichen glatt ist, das heißt, dass ein Außenradius des Mantels in Umfangsrichtung betrachtet konstant ist, und im Querschnitt betrachtet eine Innenkontur des Mantels im Bereich des Dehnungsbereichsinnenumfangs eine wellenförmige Kontur aufweist, das heißt, dass ein Innenradius des Mantels in Umfangsrichtung betrachtet nicht konstant ist. Es ist auch möglich, dass im Bereich des Dehnungsbereichsinnenumfangs und im Bereich des Dehnungsbereichsaußenumfangs zumindest über einen Teilbereich des Mantelumfangs unterschiedliche Wellenformen vorgesehen sind.

Nach einer vorteilhaften Ausgestaltung wird vorgeschlagen, dass der Mantel im Dehnungsbereich erste Vertiefungen aufweist. Die ersten Vertiefungen sind in Umfangsrichtung betrachtet voneinander beabstandet. Die ersten Vertiefungen sind von einem Dehnungsbereichsaußenumfang aus nach innen gerichtet. Der Dehnungsbereich hat eine Dehnungsbereichsaußenoberfläche. Zudem hat jede erste Vertiefung eine Vertiefungsfläche. Ein Verhältnis der Summe aller ersten Vertiefungsflächen zu der Dehnungsbereichsaußenoberfläche ist hier kleiner oder gleich eins. Bevorzugt ist ein solches Verhältnis kleiner als 0,9 und besonders bevorzugt kleiner als 0,7.

Eine erste Vertiefung entspricht insbesondere in einer radialen Richtung von außen nach innen betrachtet einem Wellental. Der Dehnungsbereichsaußenumfang bildet insbesondere eine äußere Einhüllende bzw. einen äußersten Umfang um den Dehnungsbereich. Die Dehnungsbereichsaußenoberfläche ist als eine gesamte Außenoberfläche des Dehnungsbereichs verstanden. Die Dehnungsbereichsaußenoberfläche entspricht insbesondere der Fläche, die die äußere Oberfläche des Dehnungsbereichs in einem gestreckten Zustand, bzw. in einem abgewickelten Zustand, des Dehnungsbereichs hat. Wenn die vorliegende Wellenform bogenförmig ist, so entspricht eine erste Vertiefungsfläche der Fläche, die zwischen zwei benachbarten Wendepunkten der Wellenform gemessen werden kann. Diese Wendepunkte liegen im Bereich der ersten Vertiefung oder an zwei benachbarten Längsrändern der ersten Vertiefung. Als Wendepunkte sind hier die Punkte verstanden, an denen sich die Krümmung einer Kontur von einer Krümmung im Uhrzeigersinn zu einer Krümmung entgegen dem Uhrzeigersinn ändert oder umgekehrt. Ein Wendepunkt kann auch als der Punkt aufgefasst werden, an dem sich das Krümmungsverhalten einer Kontur ändert, z. B. durch einen Wechsel von einer Rechtskurve in eine Linkskurve oder umgekehrt. Ein solcher Wechsel wird auch als Bogenwechsel bezeichnet. Wenn eine eckige Wellenform vorliegt, so entspricht die erste Vertiefungsfläche der im Wesentlichen ebenen Fläche im Grund des Wellentals, bzw. im Grund der ersten Vertiefung. Liegt eine spitze Wellenform vor, so kann die Fläche der beiden spitz zulaufenden Flanken als erste Vertiefungsfläche verstanden werden.

Nach einer vorteilhaften Ausgestaltung wird vorgeschlagen, dass der Mantel zumindest im Dehnungsbereich eine im Wesentlichen konstante Mantelstärke aufweist. Zudem hat jede erste Vertiefung eine erste Tiefe. Ein Verhältnis von erster Tiefe zu Mantelstärke ist hier kleiner oder gleich eins. Bevorzugt ist ein solches Verhältnis kleiner als 0,9 und besonders bevorzugt kleiner als 0,85.
Unter einer Mantelstärke wird ein insbesondere nächstliegender Abstand zwischen einer Außenseite des Mantels und einer Innenseite des Mantels verstanden. Eine erste Tiefe ist insbesondere ein kürzester Abstand zwischen Dehnungsbereichsaußenumfang und dem tiefsten Punkt der ersten Vertiefung. Als tiefster Punkt kann der Grund einer ersten Vertiefung aufgefasst werden. Die erste Tiefe ist hier als ein Abstand in radialer Richtung zu verstehen.

Nach einer weiteren vorteilhaften Ausgestaltung wird vorgeschlagen, dass der Mantel zumindest im Dehnungsbereich eine im Wesentlichen konstante Mantelstärke aufweist. Jede erste Vertiefung hat eine erste Tiefe. Ein Verhältnis von erster Tiefe zu Mantelstärke ist hier größer als 1. Bevorzugt ist ein solches Verhältnis größer als 1,15 und besonders bevorzugt größer als 1,3.

Nach einer noch weiteren vorteilhaften Ausgestaltung wird vorgeschlagen, dass jede erste Vertiefung eine erste Tiefe und die Lippe eine Lippentiefe hat. Ein Verhältnis von erster Tiefe zur Lippentiefe ist hier kleiner oder gleich eins. Bevorzugt ist ein solches Verhältnis kleiner als 0,6 und besonders bevorzugt kleiner als 0,2. Die Lippentiefe bezeichnet hier insbesondere die radial nach innen gerichtete Ausbreitung der Lippe.

Nach einer vorteilhaften Ausgestaltung wird vorgeschlagen, dass das Kopfteil eine Kopfteillänge und jede erste Vertiefung eine erste Vertiefungslänge hat. Ein Verhältnis von erster Vertiefungslänge zu Kopfteillänge ist hier kleiner oder gleich eins. Bevorzugt ist ein solches Verhältnis kleiner als 0,9 und besonders bevorzugt kleiner als 0,8. Die erste Vertiefungslänge bezeichnet hier die Ausbreitung der ersten Vertiefung in Längsrichtung.

Nach einer weiteren vorteilhaften Ausgestaltung wird vorgeschlagen, dass jede erste Vertiefung eine erste Vertiefungslänge und der Dehnungsbereich eine Dehnungsbereichslänge hat. Ein Verhältnis von erster Vertiefungslänge zu Dehnungsbereichslänge ist hier kleiner oder gleich eins. Ein solches Verhältnis ist bevorzugt kleiner als 0,9 und besonders bevorzugt kleiner gleich 0,85. Ein solches Verhältnis beträgt jedoch bevorzugt mindestens 0,6 und besonders bevorzugt mindestens 0,7.

Die Dehnungsbereichslänge bezeichnet hier die Ausbreitung des Dehnungsbereichs in Längsrichtung. Bevorzugt ist die Dehnungsbereichslänge in Umfangsrichtung betrachtet konstant. Dies ist jedoch nicht zwingend, weil die Dehnungsbereichslänge auch über den Mantelumfang variabel gebildet sein kann. Es ist weiter bevorzugt, dass die erste Vertiefungslänge der Dehnungsbereichslänge entspricht.

Wenn die erste Vertiefungslänge kleiner als die Dehnungsbereichslänge ist, so kann zumindest ein erster Anteil der ersten Vertiefungen in Längsrichtung betrachtet an einem unteren Rand des Dehnungsbereichs beginnen und ein zweiter Anteil der ersten Vertiefungen an einem oberen Rand des Dehnungsbereichs beginnen. Die ersten Vertiefungen können in Längsrichtung betrachtet jeweils vor Erreichen des gegenüberliegenden Rands enden. Somit kann es bezogen auf einen Querschnitt des Mantels auch zu einer Überlappung von ersten Vertiefungen kommen. Hier kann in Längsrichtung betrachtet ein Überlappungsbereich entstehen. Es ist bevorzugt, dass sich die ersten Vertiefungen in einer Richtung parallel zur Längsrichtung erstrecken. Dies ist jedoch nicht zwingend, weil die ersten Vertiefungen sich auch schräg bzw. windschief zur Längsrichtung erstrecken können. Hierdurch kann es auch zu einem Überlappungsbereich in Längsrichtung betrachtet der ersten Vertiefungen kommen.

Nach einer weiteren vorteilhaften Ausgestaltung wird vorgeschlagen, dass die ersten Vertiefungen in Umfangsrichtung äquidistant zueinander angeordnet sind.

Nach einer vorteilhaften Ausgestaltung wird vorgeschlagen, dass der Mantel im Dehnungsbereich zweite Vertiefungen aufweist. Die zweiten Vertiefungen sind in Umfangsrichtung betrachtet voneinander beabstandet. Die zweiten Vertiefungen sind von einem Dehnungsbereichsinnenumfang aus nach außen gerichtet. Der Dehnungsbereich hat eine Dehnungsbereichsinnenoberfläche. Jede zweite Vertiefung hat eine zweite Vertiefungsfläche. Ein Verhältnis der Summe aller zweiten Vertiefungsflächen zu der Dehnungsbereichsinnenoberfläche ist hier kleiner oder gleich eins. Bevorzugt ist solch ein Verhältnis kleiner oder gleich 0,9 und besonders bevorzugt kleiner oder gleich 0,85.

Eine zweite Vertiefung entspricht insbesondere in einer radialen Richtung von innen nach außen betrachtet einem Wellental. Der Dehnungsbereichsinnenumfang ist insbesondere ein innerster Umfang des Dehnungsbereichs. Die Dehnungsbereichsinnenoberfläche ist als eine gesamte Innenoberfläche des Dehnungsbereichs verstanden. Die Dehnungsbereichsinnenoberfläche entspricht insbesondere der Fläche, die die innere Oberfläche des Dehnungsbereichs in einem gestreckten Zustand, bzw. in einem abgewickelten Zustand, des Dehnungsbereichs hat. Wenn die vorliegende Wellenform bogenförmig ist, so entspricht eine zweite Vertiefungsfläche der Fläche, die zwischen zwei benachbarten Wendepunkten der Wellenform gemessen werden kann. Diese Wendepunkte liegen im Bereich der zweiten Vertiefung oder an zwei benachbarten Längsrändern der zweiten Vertiefung. Als Wendepunkte sind hier die Punkte verstanden, an denen sich die Krümmung einer Kontur von einer Krümmung im Uhrzeigersinn zu einer Krümmung entgegen dem Uhrzeigersinn ändert oder umgekehrt. Ein Wendepunkt kann auch als der Punkt aufgefasst werden, an dem sich das Krümmungsverhalten einer Kontur ändert, z. B. durch einen Wechsel von einer Rechtskurve in eine Linkskurve oder umgekehrt. Ein solcher Wechsel wird auch als Bogenwechsel bezeichnet. Wenn eine eckige Wellenform vorliegt, so entspricht die zweite Vertiefungsfläche der im Wesentlichen ebenen Fläche im Grund des Wellentals, bzw. im Grund der zweiten Vertiefung. Liegt eine spitze Wellenform vor, so kann die Fläche der beiden spitz zulaufenden Flanken als zweite Vertiefungsfläche verstanden werden.

Nach einer vorteilhaften Ausgestaltung wird vorgeschlagen, dass der Mantel zumindest im Dehnungsbereich eine im Wesentlichen konstante Mantelstärke aufweist. Zudem hat jede zweite Vertiefung eine zweite Tiefe. Ein Verhältnis von zweiter Tiefe zu Mantelstärke ist hier kleiner oder gleich eins. Bevorzugt ist ein solches Verhältnis kleiner als 0,9 und besonders bevorzugt kleiner als 0,85.

Unter einer Mantelstärke wird ein insbesondere kürzester Abstand zwischen einer Außenseite des Mantels und einer Innenseite des Mantels verstanden. Eine zweite Tiefe ist insbesondere ein kürzester Abstand zwischen Dehnungsbereichsinnenumfang und dem tiefsten Punkt der zweiten Vertiefung. Als tiefster Punkt kann der Grund der zweiten Vertiefung aufgefasst werden. Die zweite Tiefe ist hier als ein Abstand in radialer Richtung zu verstehen.

Nach einer weiteren vorteilhaften Ausgestaltung wird vorgeschlagen, dass der Mantel zumindest im Dehnungsbereich eine im Wesentlichen konstante Mantelstärke aufweist. Jede zweite Vertiefung hat eine zweite Tiefe. Ein Verhältnis von zweiter Tiefe zu Mantelstärke ist hier größer als eins. Bevorzugt ist ein solches Verhältnis größer als 1,15 und besonders bevorzugt größer als 1,3.

Nach einer noch weiteren vorteilhaften Ausgestaltung wird vorgeschlagen, dass jede zweite Vertiefung eine zweite Tiefe und die Lippe eine Lippentiefe hat. Ein Verhältnis von zweiter Tiefe zu der Lippentiefe ist hier kleiner oder gleich eins. Bevorzugt ist ein solches Verhältnis kleiner als 0,6 und besonders bevorzugt kleiner als 0,2. Die Lippentiefe bezeichnet hier die radial nach innen gerichtete Ausbreitung der Lippe.

Nach einer vorteilhaften Ausgestaltung wird vorgeschlagen, dass das Kopfteil eine Kopfteillänge und jede zweite Vertiefung eine zweite Vertiefungslänge hat. Ein Verhältnis von zweiter Vertiefungslänge zu Kopfteillänge ist hier kleiner oder gleich eins. Bevorzugt ist ein solches Verhältnis kleiner als 0,9 und besonders bevorzugt kleiner als 0,8. Die zweite Vertiefungslänge bezeichnet hier die Ausbreitung der zweiten Vertiefung in Längsrichtung.

Nach einer weiteren vorteilhaften Ausgestaltung wird vorgeschlagen, dass jede zweite Vertiefung eine zweite Vertiefungslänge und der Dehnungsbereich eine Dehnungsbereichslänge hat. Ein Verhältnis von zweiter Vertiefungslänge zu Dehnungsbereichslänge ist hier kleiner oder gleich 1. Ein solches Verhältnis ist bevorzugt kleiner als 0,9 und besonders bevorzugt kleiner gleich 0,85. Ein solches Verhältnis beträgt jedoch bevorzugt mindestens 0,6 und besonders bevorzugt 0,7. Die Dehnungsbereichslänge bezeichnet hier die Ausbreitung des Dehnungsbereichs in Längsrichtung. Bevorzugt ist die Dehnungsbereichslänge in Umfangsrichtung betrachtet konstant. Dies ist jedoch nicht zwingend, weil die Dehnungsbereichslänge auch über den Mantelumfang variabel gebildet sein kann. Es ist weiter bevorzugt, dass die zweite Vertiefungslänge der Dehnungsbereichslänge entspricht.

Wenn die zweite Vertiefungslänge kleiner als die Dehnungsbereichslänge ist, so kann zumindest ein erster Anteil der zweiten Vertiefungen in Längsrichtung betrachtet an einem unteren Rand des Dehnungsbereichs beginnen und ein zweiter Anteil der zweiten Vertiefungen an einem oberen Rand des Dehnungsbereichs beginnen. Die zweiten Vertiefungen können in Längsrichtung betrachtet jeweils vor Erreichen des gegenüberliegenden Rands enden. Somit kann es bezogen auf einen Querschnitt des Mantels auch zu einer Überlappung von zweiten Vertiefungen kommen. Hierbei kann in Längsrichtung betrachtet ein Überlappungsbereich entstehen. Es ist bevorzugt, dass sich die zweiten Vertiefungen in einer Richtung parallel zur Längsrichtung erstrecken. Dies ist jedoch nicht zwingend, weil die zweiten Vertiefungen sich auch schräg, bzw. windschief, zur Längsrichtung erstrecken können. Hierdurch kann es zu einem Überlappungsbereich in Längsrichtung betrachtet der zweiten Vertiefungen kommen.

Nach einer weiteren vorteilhaften Ausgestaltung wird vorgeschlagen, dass die zweiten Vertiefungen in Umfangsrichtung äquidistant zueinander angeordnet sind.

Nach einer weiteren vorteilhaften Ausgestaltung wird vorgeschlagen, dass der Mantel zumindest im Dehnungsbereich eine im Wesentlichen konstante Mantelstärke aufweist. Bevorzugt weist der gesamte Mantel eine im Wesentlichen konstante Mantelstärke auf.

Nach einer weiteren vorteilhaften Ausgestaltung wird vorgeschlagen, dass das Kopfteil eine Kopfteillänge und der Dehnungsbereich eine Dehnungsbereichslänge hat. Ein Verhältnis von Dehnungsbereichslänge zu Kopfteillänge ist hier kleiner oder gleich eins. Ein solches Verhältnis ist bevorzugt kleiner als 0,8 und besonders bevorzugt kleiner als 0,7.

Nach einer weiteren vorteilhaften Ausgestaltung wird vorgeschlagen, dass das Schaftteil an einem dem Kopfteil gegenüberliegenden Ende einstückig mit einem kurzen Milchschlauch gebildet ist. Eine solche Ausbildung wird auch als Monoblock bezeichnet. Bevorzugt sind das Zitzengummi und der kurze Milchschlauch aus einem gemeinsamen Material, insbesondere aus Gummi oder Silikon gebildet. Das Zitzengummi kann hierbei auch aus einem weicheren Material als der kurze Milchschlauch gebildet sein. Hier wird auf die oben beschriebenen Ausbildungen und Herstellungsverfahren des Zitzengummis und dessen Materialien Bezug genommen.

Nach einem weiteren Aspekt betrifft die Erfindung einen Melkbecher mit den Merkmalen des Anspruchs 18. Ein Melkbecher umfasst auch eine Melkbecherhülse. Das Zitzengummi ist mit der Melkbecherhülse bevorzugt kraftschlüssig und/oder formschlüssig verbunden.

Die vorstehend für das erfindungsgemäße Zitzengummi geschilderten Vorteile und besonderen Merkmale sind in entsprechender Weise auf den hier beschriebenen Melkbecher übertragbar. Insbesondere kann auch der Melkbecher in entsprechender Weise zum erfindungsgemäßen Zitzengummi weitergebildet werden. Auf die obigen Erläuterungen und Charakterisierungen des erfindungsgemäßen Zitzengummis wird hier vollumfänglich Bezug genommen.

Nach einem weiteren Aspekt betrifft die Erfindung ein Melkzeug mit den Merkmalen des Anspruchs 20.

Die oben für das erfindungsgemäße Zitzengummi geschilderten Vorteile und besonderen Merkmale sind in entsprechender Weise auf das hier beschriebene Melkzeug übertragbar. Insbesondere kann auch das Melkzeug in entsprechender Weise zum erfindungsgemäßen Zitzengummi weitergebildet werden. Auf die obigen Erläuterungen und Charakterisierungen des erfindungsgemäßen Zitzengummis wird hier vollumfänglich Bezug genommen.
Die Erfindung sowie das technische Umfeld werden nachfolgend anhand der Figuren näher erläutert. Es ist darauf hinzuweisen, dass die Figuren besonders bevorzugte Ausführungsvarianten und Details der Erfindung zeigen, diese jedoch nicht darauf beschränkt ist. Die Figuren und insbesondere die darin dargestellten Größenverhältnisse sind nur schematisch. Es zeigen:
- Fig. 1:: eine perspektivische Ansicht eines Zitzengummis,
- Fig. 2:: eine schematische Ansicht eines gewellten Querschnitts des Mantels,
- Fig. 3:: schematische Ansichten beispielhafter Wellformen,
- Fig. 4:: eine schematische Ansicht eines Teils eines gewellten Querschnitts des Mantels,
- Fig. 5:: schematische Ansichten von Vertiefungsflächen beispielhafter Wellformen,
- Fig. 6:: eine perspektivische Ansicht eines Zitzengummis mit kurzem Milchschlauch,
- Fig. 7:: eine Schnittdarstellung eines Zitzengummis mit kurzem Milchschlauch,
- Fig. 8:: eine perspektivische Ansicht eines Melkzeugs.

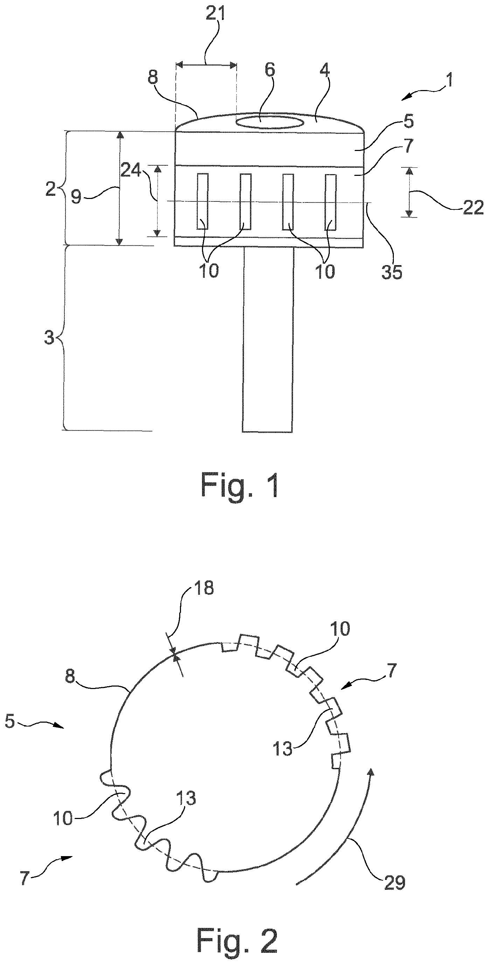

Die Fig. 1 zeigt eine perspektivische Ansicht eines Zitzengummis 1. Das Zitzengummi 1 ist mit einem Kopfteil 2 und einem mit dem Kopfteil 2 verbundenen Schaftteil 3 gebildet. Das Kopfteil 2 hat einen Mantel 5 und eine Einführöffnung 6 für eine Zitze eines Tieres. Das Kopfteil 2 hat zudem eine nach innen weisende Lippe, wobei die Einführöffnung 6 durch die Lippe 4 radial nach außen begrenzt ist. Die Lippe 4 hat in radialer Richtung eine Lippentiefe 21. Das Zitzengummi 1 ist einteilig gebildet.

Aus der Darstellung nach Fig. 1 ist zu erkennen, dass der Mantel 5 einen Dehnungsbereich 7 hat. Der Dehnungsbereich 7 erstreckt sich hier über einen Mantelumfang 8. Zudem erstreckt sich der Dehnungsbereich 7 über einen Teil einer Kopfteillänge 9. Die Erstreckung des Dehnungsbereichs 7 in Längsrichtung ist als Dehnungsbereichslänge 24 dargestellt. Der Mantel 5 ist in dem Dehnungsbereich 7 im Querschnitt wellenförmig gebildet. Hierzu hat der Mantel 5 im Dehnungsbereich 7 erste Vertiefungen 10. Die ersten Vertiefungen 10 haben eine erste Vertiefungslänge 22 und sind in Umfangsrichtung betrachtet voneinander beabstandet angeordnet. Die Querschnittsebene 35 ist in der Fig. 1 mittels strichpunktierter Linie angedeutet.

Fig. 2 zeigt eine schematische Ansicht eines gewellten Querschnitts des Mantels 5. Es ist gezeigt, dass sich ein Dehnungsbereich 7 auch nur über einen Teil des Mantelumfangs 8 erstrecken kann. Es ist zudem zu erkennen, dass der Mantel 5 mehr als einen Dehnungsbereich 7 haben kann. Hier sind zwei sich gegenüberliegende Dehnungsbereiche 7 dargestellt, die mit unterschiedlichen Wellenformen ausgeführt sind. In der Fig. 2 ist zudem eine konstante Mantelstärke 18 und eine Umfangsrichtung 29 gezeigt.

In der Querschnittsansicht der Fig. 2 ist zu erkennen, dass der Mantel 5 im Dehnungsbereich 7 erste Vertiefungen 10 und zweite Vertiefungen 13 aufweist. Die Vertiefungen 10, 13 sind in Umfangsrichtung betrachtet voneinander beabstandet. Die ersten Vertiefungen 10 weisen in radialer Richtung betrachtet von außen nach innen und die zweiten Vertiefungen 13 weisen in radialer Richtung betrachtet von innen nach außen. Mit den ersten Vertiefungen 10 und den zweiten Vertiefungen 13 sind hier zwei Dehnungsbereiche 7 gebildet, die im Querschnitt wellenförmig sind.

Aufgrund der Dehnungsbereiche 7 und der Wellungen ist das Kopfteil 2 in radialer Richtung dehnbar.

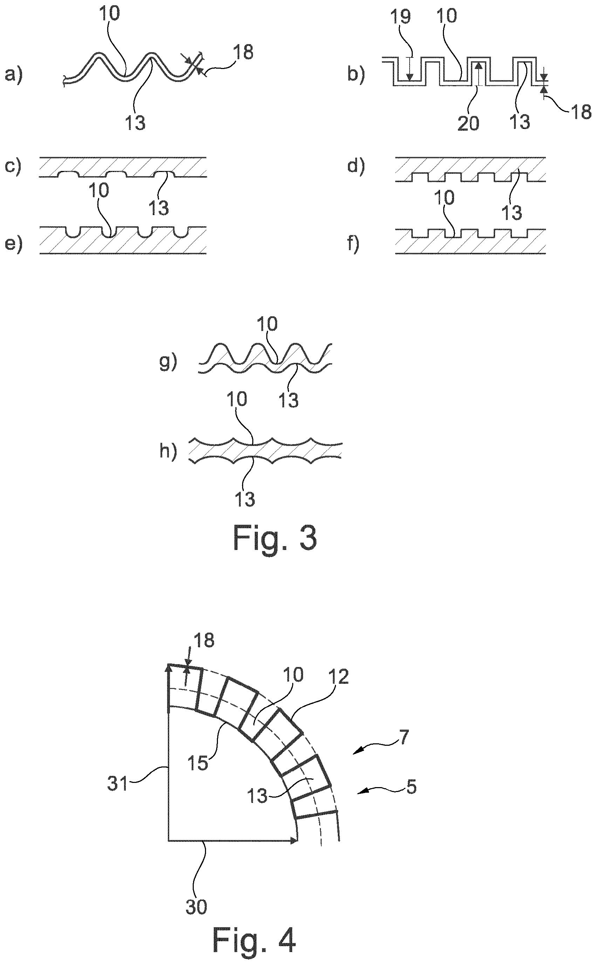

Fig. 3 zeigt schematische Ansichten beispielhafter Wellenformen. Die Wellenformen bzw. Wellungen sind jeweils im Querschnitt gezeigt, wobei die Wellungen hier vereinfacht horizontal und nicht um einen Kreismittelpunkt gebogen dargestellt sind. Die Wellenformen der Beispiele a) und b) weisen jeweils eine konstante Mantelstärke 18 auf. Es sind erste Vertiefungen 10 und zweite Vertiefungen 13 dargestellt. Anhand des Beispiels b) ist eine erste Tiefe 19 und eine zweite Tiefe 20 dargestellt. Das Beispiel a) zeigt eine bogenförmige Wellenform und das Beispiel b) zeigt eine eckige Wellenform. In den Beispielen der Fig. 3 ist oben jeweils die Außenseite des Dehnungsbereichs und unten jeweils die Innenseite des Dehnungsbereichs dargestellt.

Die Beispiele c) und d) der Fig. 3 zeigen, dass die Außenseite des Mantels im Dehnungsbereich auch im Wesentlichen glatt ausgeführt sein kann. Hier ist jeweils nur die Innenseite des Mantels im Querschnitt mit einer wellenförmigen Kontur gebildet. Beispiel c) zeigt hier eine bogenförmige Wellenform und Beispiel d) zeigt eine eckige Wellenform. Die Beispiele e) und f) zeigen, dass auch nur die Außenseite des Mantels im Querschnitt mit einer wellenförmigen Kontur gebildet sein kann, wobei hier die Innenseite des Mantels im Dehnungsbereich im Wesentlichen glatt gebildet ist. Beispiel e) zeigt eine bogenförmige Wellenform und Beispiel f) zeigt eine eckige Wellenform. In den Beispielen c) und d) sind somit zweite Vertiefungen 13 gezeigt, wobei in den Beispielen e) und f) erste Vertiefungen 10 gezeigt sind.

In den Beispielen g) und h) der Fig. 3 sind weitere beispielhafte Wellenformen gezeigt. In Beispiel g) ist verdeutlicht, dass die Wellung der Außenseite und die Wellung der Innenseite nicht dieselbe Amplitude und nicht dieselbe Wellenlänge haben müssen. Es sind erste Vertiefungen 10 und zweite Vertiefungen 13 gezeigt. In Beispiel h) ist gezeigt, dass die Wellungen auch entgegengerichtet sein können, wobei sich hier erste Vertiefungen 10 und zweite Vertiefungen 13 in radialer Richtung betrachtet gegenüberliegen. Die Beispiele c) - h) zeigen auch, dass der Mantel 5 im Dehnungsbereich 7 nicht zwingend eine konstante Mantelstärke 18 haben muss.

Fig. 4 zeigt eine schematische Ansicht eines Teils eines gewellten Querschnitts des Mantels 5. Es ist in Fig. 4 eine eckige Wellenform dargestellt. Es ist ein Dehnungsbereichsinnenradius 30 und ein Dehnungsbereichsaußenradius 31 des Dehnungsbereichs 7 zu erkennen. Der Dehnungsbereich 7 hat darüber hinaus einen Dehnungsbereichsaußenumfang 12 und einen Dehnungsbereichsinnenumfang 15, die hier jeweils mit gepunkteten Linien dargestellt sind. Ein Teil des Mantels 5 ist hier im Querschnitt dargestellt und es ist gezeigt, dass der Mantel im Dehnungsbereich 7 erste Vertiefungen 10 und zweite Vertiefungen 13 hat. Der Mantel 5 hat hier wiederum eine konstante Mantelstärke 18.

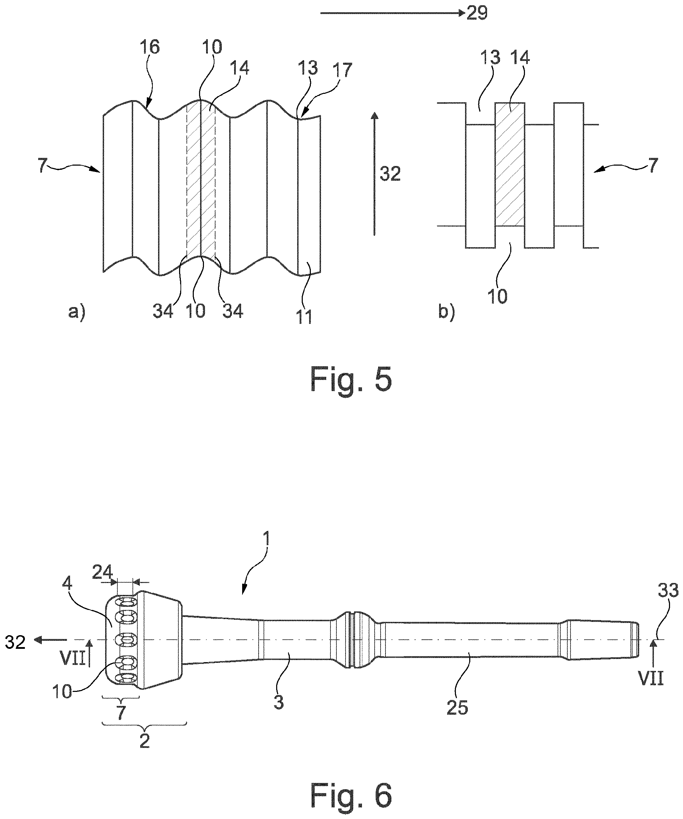

Fig. 5 zeigt schematische Ansichten von Vertiefungsflächen beispielhafter Wellformen. Beispiel a) zeigt eine bogenförmige Wellenform und Beispiel b) zeigt eine eckige Wellenform. Zur Orientierung sind hier eine Längsrichtung 32 und eine Umfangsrichtung 29 eingezeichnet. Der Blick ist hier in radialer Richtung betrachtet von außen nach innen auf einen äußeren Teil des Dehnungsbereichs 7 gerichtet. In dieser Blickrichtung sind erste Vertiefungsflächen 14 der ersten Vertiefungen 10 zu erkennen. In Beispiel a) ist eine bogenförmige Wellenform gezeigt, wobei hier die erste Vertiefungsfläche 14 die Fläche zwischen zwei benachbarten Wendepunkten der Wellung im Bereich der ersten Vertiefung 10 ist. Die Wendepunkte 34 sind hier als gepunktete Linien entlang der Längsrichtung 32 dargestellt. In den Beispielen a) und b) der Fig. 5 ist jeweils eine erste Vertiefungsfläche 14 schraffiert dargestellt. Die zweiten Vertiefungsflächen 17 sind aufgrund der hier betrachteten Blickrichtung nicht zu sehen, sie sind jedoch in analoger Weise zu den ersten Vertiefungsflächen 14 zu verstehen. Da der Blick in radialer Richtung von außen nach innen gerichtet ist, ist hier auch eine Dehnungsbereichsaußenoberfläche 11 zu erkennen. Die Dehnungsbereichsaußenoberfläche 11 ist die gesamte Außenoberfläche des Dehnungsbereichs 7. Die Dehnungsbereichsinnenoberfläche 16 ist aufgrund der Blickrichtung nicht zu erkennen. Die Dehnungsbereichsinnenoberfläche 16 ist in analoger Weise zur Dehnungsbereichsaußenoberfläche 11 zu verstehen und beschreibt somit die gesamte Innenoberfläche des Dehnungsbereichs 7.

Das Beispiel b) der Fig. 5 zeigt eine eckige Wellenform. Da der Blick in radialer Richtung betrachtet von außen nach innen gerichtet ist, ist eine erste Vertiefungsfläche 14 einer ersten Vertiefung 10 zu erkennen. Wenn eine eckige Wellenform vorliegt, müssen keine Wendepunkte zur Ermittlung der ersten Vertiefungsfläche 14 herangezogen werden. Die erste Vertiefungsfläche 14 betrifft hier die im Wesentlichen ebene Fläche im Grund der ersten Vertiefung 10, die in dieser Blickrichtung auch als Wellental aufgefasst werden kann.

In Fig. 6 ist eine perspektivische Ansicht eines Zitzengummis 1 mit einem kurzen Milchschlauch 25 dargestellt. Das Zitzengummi 1 und der kurze Milchschlauch 25 sind am Ende des Schaftteils 3 miteinander fest verbunden. Das Zitzengummi und der kurze Milchschlauch 25 sind hier einstückig gebildet. Eine solche einstückige Ausführung von Zitzengummi 1 und kurzem Milchschlauch 25 wird auch als Monoblock bezeichnet. In der Fig. 6 ist die Längsachse 33 des Zitzengummis 1 eingezeichnet. Die Längsachse 33 betrifft hier die Rotationsachse des Zitzengummis 1. Zudem ist auch eine Längsrichtung 32 dargestellt.

Aus der Darstellung nach Fig. 6 ist zu erkennen, dass der Mantel 5 des Kopfteils 2 einen Dehnungsbereich 7 hat. In Längsrichtung 32 erstreckt sich der Dehnungsbereich 7 über eine Dehnungsbereichslänge 24. Zudem ist zu erkennen, dass der Mantel 5 im Dehnungsbereich 7 erste Vertiefungen 10 aufweist.

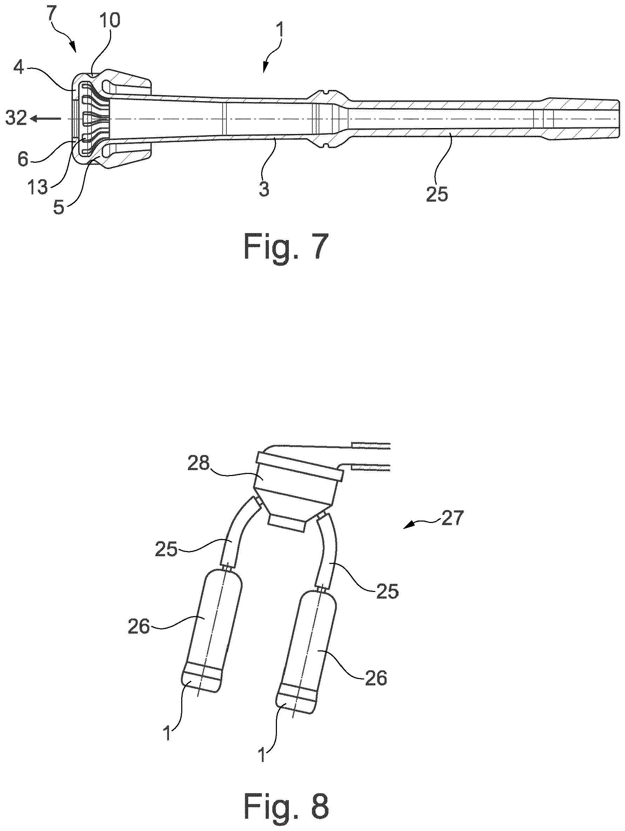

In Fig. 7 ist eine Schnittdarstellung eines Zitzengummis 1 mit kurzem Milchschlauch 25 dargestellt. Die in Fig. 7 betrachtete Schnittebene ist in der Fig. 6 als Schnitt VII - VII eingezeichnet. In der Schnittdarstellung ist zu erkennen, dass das Zitzengummi 1 und der kurze Milchschlauch 25 einstückig gebildet sind. Im vorliegenden Beispiel ist das mit einem kurzen Milchschlauch 25 verbundene Zitzengummi 1 aus Silikon und als Monoblock hergestellt.

Nach der Darstellung nach Fig. 7 ist auch zu erkennen, dass der Mantel 5 im Dehnungsbereich 7 erste Vertiefungen 10 aufweist. Es ist zudem eine Einführöffnung 6 für eine Zitze eines Tieres zu erkennen. Die Einführöffnung 6 ist durch eine nach innen weisende Lippe 4 begrenzt.

Aus der Schnittdarstellung nach Fig. 7 sind auch zweite Vertiefungen 13 zu erkennen. Die zweiten Vertiefungen 13 sind entgegen der Längsrichtung 32 auslaufend gebildet. Hierzu verjüngen sich die zweiten Vertiefungen jeweils entgegen der Längsrichtung 32. Hierbei folgen die zweiten Vertiefungen 13 einem inneren Profil des Zitzengummis 1.

In Fig. 8 ist eine perspektivische Ansicht eines Melkzeugs 27 gezeigt. Das Melkzeug 27 umfasst hier ein Milchsammelstück 28 und zwei Melkbecher 26. Die Melkbecher 26 sind jeweils mit einem Zitzengummi 1 ausgeführt. Die Melkbecher 26 sind jeweils über einen kurzen Milchschlauch 25 mit dem Milchsammelstück 28 verbunden.

Durch die vorliegende Erfindung wird ein Zitzengummi bereitgestellt, das sich insbesondere bei kleinen, dünnen und kurzen Zitzen eines Tieres aufgrund der radialen Dehnbarkeit des Kopfteils an unterschiedliche Zitzengeometrien anpassen kann. Es sind zudem ein Melkbecher und ein Melkzeug mit einem entsprechenden Zitzengummi angegeben.

### Bezugszeichenliste

- 1: Zitzengummi
- 2: Kopfteil
- 3: Schaftteil
- 4: Lippe
- 5: Mantel
- 6: Einführöffnung
- 7: Dehnungsbereich
- 8: Mantelumfang
- 9: Kopfteillänge
- 10: erste Vertiefung
- 11: Dehnungsbereichsaußenoberfläche
- 12: Dehnungsbereichsaußenumfang
- 13: zweite Vertiefung
- 14: erste Vertiefungsfläche
- 15: Dehnungsbereichsinnenumfang
- 16: Dehnungsbereichsinnenoberfläche
- 17: zweite Vertiefungsfläche
- 18: Mantelstärke
- 19: erste Tiefe
- 20: zweite Tiefe
- 21: Lippentiefe
- 22: erste Vertiefungslänge
- 23: zweite Vertiefungslänge
- 24: Dehnungsbereichslänge
- 25: kurzer Milchschlauch
- 26: Melkbecher
- 27: Melkzeug
- 28: Milchsammelstück
- 29: Umfangsrichtung
- 30: Dehnungsbereichsinnenradius
- 31: Dehnungsbereichsaußenradius
- 32: Längsrichtung
- 33: Längsachse
- 34: Wendepunkt
- 35: Querschnittsebene

## Patentansprüche

1. Zitzengummi (1) mit einem Kopfteil (2) und einem mit dem Kopfteil (2) verbundenen Schaftteil (3), wobei das Kopfteil (2) einen Mantel (5) und eine Einführöffnung (6) für eine Zitze eines Tieres hat, wobei die Einführöffnung (6) durch eine nach innen weisende Lippe (4) begrenzt ist, wobei der Mantel (5) einen im Querschnitt wellenförmig gebildeten Dehnungsbereich (7) hat, **dadurch gekennzeichnet, dass** der Dehnungsbereich (7) in Längsrichtung betrachtet vom Schaftteil (3) ausgehend mit einem Abstand zum Schaftteil (3) beginnt und mit einem Abstand zu der nach innen weisenden Lippe (4) endet, wobei der Dehnungsbereich (7) sich über mindestens einen Teil eines Mantelumfangs (8) erstreckt.

2. Zitzengummi nach Patentanspruch 1, **dadurch gekennzeichnet, dass** der Mantel (5) im Dehnungsbereich (7) erste Vertiefungen (10) aufweist, die in Umfangsrichtung betrachtet voneinander beabstandet sind, wobei die ersten Vertiefungen (10) von einem Dehnungsbereichsaußenumfang (12) aus nach innen gerichtet sind, wobei der Dehnungsbereich (7) eine Dehnungsbereichsaußenoberfläche (11) hat und wobei jede erste Vertiefung (10) eine erste Vertiefungsfläche (14) hat und wobei ein Verhältnis der Summe aller ersten Vertiefungsflächen (14) zu der Dehnungsbereichsaußenoberfläche (11) kleiner oder gleich eins ist.

3. Zitzengummi nach Patentanspruch 2, **dadurch gekennzeichnet, dass** der Mantel (5) zumindest im Dehnungsbereich (7) eine im Wesentlichen konstante Mantelstärke (18) aufweist, wobei jede erste Vertiefung (10) eine erste Tiefe (19) hat, wobei ein Verhältnis von erster Tiefe (19) zu Mantelstärke (18) kleiner oder gleich eins ist.

4. Zitzengummi nach Patentanspruch 2, **dadurch gekennzeichnet, dass** der Mantel (5) zumindest im Dehnungsbereich (7) eine im Wesentlichen konstante Mantelstärke (18) aufweist, wobei jede erste Vertiefung (10) eine erste Tiefe (19) hat, wobei ein Verhältnis von erster Tiefe (19) zu Mantelstärke (18) größer als eins ist.

5. Zitzengummi nach einem der Patentansprüche 2 bis 4, **dadurch gekennzeichnet, dass** jede erste Vertiefung (10) eine erste Tiefe (19) und die Lippe (4) eine Lippentiefe (21) hat, wobei ein Verhältnis von erster Tiefe (19) zu Lippentiefe (21) kleiner oder gleich eins ist.

6. Zitzengummi nach einem der Patentansprüche 2 bis 5, **dadurch gekennzeichnet, dass** das Kopfteil (2) eine Kopfteillänge (9) und jede erste Vertiefung (10) eine erste Vertiefungslänge (22) hat, wobei ein Verhältnis von erster Vertiefungslänge (22) zu Kopfteillänge (9) kleiner oder gleich eins ist.

7. Zitzengummi nach einem der Patentansprüche 2 bis 6, **dadurch gekennzeichnet, dass** jede erste Vertiefung (10) eine erste Vertiefungslänge (22) und der Dehnungsbereich (7) eine Dehnungsbereichslänge (24) hat, wobei ein Verhältnis von erster Vertiefungslänge (22) zu Dehnungsbereichslänge (24) kleiner oder gleich eins ist.

8. Zitzengummi nach einem der Patentansprüche 2 bis 7, **dadurch gekennzeichnet, dass** die ersten Vertiefungen (10) in Umfangsrichtung äquidistant zueinander angeordnet sind.

9. Zitzengummi nach einem der vorhergehenden Patentansprüche, **dadurch gekennzeichnet, dass** der Mantel (5) im Dehnungsbereich (7) zweite Vertiefungen (13) aufweist, die in Umfangsrichtung betrachtet voneinander beabstandet sind, wobei die zweiten Vertiefungen (13) von einem Dehnungsbereichsinnenumfang (15) aus nach außen gerichtet sind, wobei der Dehnungsbereich (7) eine Dehnungsbereichsinnenoberfläche (16) hat und wobei jede zweite Vertiefung (13) eine zweite Vertiefungsfläche (17) hat und wobei ein Verhältnis der Summe aller zweiten Vertiefungsflächen (17) zu der Dehnungsbereichsinnenoberfläche (15) kleiner oder gleich eins ist.

10. Zitzengummi nach Patentanspruch 9, **dadurch gekennzeichnet, dass** der Mantel (5) zumindest im Dehnungsbereich (7) eine im Wesentlichen konstante Mantelstärke (18) aufweist, wobei jede zweite Vertiefung (13) eine zweite Tiefe (20) hat, wobei ein Verhältnis von zweiter Tiefe (20) zu Mantelstärke (18) kleiner oder gleich eins ist.

11. Zitzengummi nach Patentanspruch 9, **dadurch gekennzeichnet, dass** der Mantel (5) zumindest im Dehnungsbereich (7) eine im Wesentlichen konstante Mantelstärke (18) aufweist, wobei jede zweite Vertiefung (10) eine zweite Tiefe (20) hat, wobei ein Verhältnis von zweiter Tiefe (20) zu Mantelstärke (18) größer als eins ist.

12. Zitzengummi nach einem der Patentansprüche 9 bis 11, **dadurch gekennzeichnet, dass** jede zweite Vertiefung (13) eine zweite Tiefe (20) und die Lippe (4) eine Lippentiefe (21) hat, wobei ein Verhältnis von zweiter Tiefe (20) zu Lippentiefe (21) kleiner oder gleich eins ist.

13. Zitzengummi nach einem der Patentansprüche 9 bis 12, **dadurch gekennzeichnet, dass** das Kopfteil (2) eine Kopfteillänge (9) und jede zweite Vertiefung (13) eine zweite Vertiefungslänge (23) hat, wobei ein Verhältnis von zweiter Vertiefungslänge (23) zu Kopfteillänge (9) kleiner oder gleich eins ist.

14. Zitzengummi nach einem der Patentansprüche 9 bis 13, **dadurch gekennzeichnet, dass** jede zweite Vertiefung (13) eine zweite Vertiefungslänge (23) und der Dehnungsbereich (7) eine Dehnungsbereichslänge (24) hat, wobei ein Verhältnis von zweiter Vertiefungslänge (23) zu Dehnungsbereichslänge (24) kleiner oder gleich eins ist.

15. Zitzengummi nach einem der Patentansprüche 9 bis 14, **dadurch gekennzeichnet, dass** die zweiten Vertiefungen (13) in Umfangsrichtung äquidistant zueinander angeordnet sind.

16. Zitzengummi nach einem der vorhergehenden Patentansprüche, **dadurch gekennzeichnet, dass** der Mantel (5) zumindest im Dehnungsbereich (7) eine im Wesentlichen konstante Mantelstärke (18) aufweist.

17. Zitzengummi nach einem der vorhergehenden Patentansprüche, **dadurch gekennzeichnet, dass** das Schaftteil (3) an einem dem Kopfteil (2) gegenüberliegenden Ende einstückig mit einem kurzen Milchschlauch (19) gebildet ist.

18. Melkbecher (26) mit einem Zitzengummi (1) mit einem Kopfteil (2) und einem mit dem Kopfteil (2) verbundenen Schaftteil (3), wobei das Kopfteil (2) einen Mantel (5) und eine Einführöffnung (6) für eine Zitze eines Tieres hat, wobei die Einführöffnung (6) durch eine nach innen weisende Lippe (4) begrenzt ist, wobei der Mantel (5) einen im Querschnitt wellenförmig gebildeten Dehnungsbereich (7) hat, **dadurch gekennzeichnet, dass** der Dehnungsbereich (7) in Längsrichtung betrachtet vom Schaftteil (3) ausgehend mit einem Abstand zum Schaftteil (3) beginnt und mit einem Abstand zu der nach innen weisenden Lippe (4) endet, wobei der Dehnungsbereich (7) sich über mindestens einen Teil eines Mantelumfangs (8) erstreckt.

19. Melkbecher nach Patentanspruch 18, wobei das Zitzengummi (1) nach einem der Patentansprüche 2 bis 17 ausgeführt ist.

20. Melkzeug (27) mit einem Milchsammelstück (28) und mindestens zwei Melkbechern (26), wobei mindestens einer der Melkbecher (26) mit einem Zitzengummi (1) mit einem Kopfteil (2) und einem mit dem Kopfteil (2) verbundenen Schaftteil (3) ausgeführt ist, wobei das Kopfteil (2) einen Mantel (5) und eine Einführöffnung (6) für eine Zitze eines Tieres hat, wobei die Einführöffnung (6) durch eine nach innen weisende Lippe (4) begrenzt ist, wobei der Mantel (5) einen im Querschnitt wellenförmig gebildeten Dehnungsbereich (7) hat, **dadurch gekennzeichnet, dass** der Dehnungsbereich (7) in Längsrichtung betrachtet vom Schaftteil (3) ausgehend mit einem Abstand zum Schaftteil (3) beginnt und mit einem Abstand zu der nach innen weisenden Lippe (4) endet, wobei der Dehnungsbereich (7) sich über mindestens einen Teil eines Mantelumfangs (8) erstreckt.

21. Melkzeug nach Patentanspruch 20, wobei das Zitzengummi (1) nach einem der Patentansprüche 2 bis 17 ausgeführt ist.

## Claims

1. Rubber teat-cup liner (1) with a head part (2) and a shank part (3) which is connected to the head part (2), wherein the head part (2) has a lateral surface (5) and an insertion opening (6) for a teat of an animal, wherein the insertion opening (6) is delimited by an inwardly pointing lip (4), wherein the lateral surface (5) has an expansion region (7) which is formed with an undulatory cross section, **characterized in that** the expansion region (7), when viewed in the longitudinal direction, proceeding from the shank part (3) begins at a distance from the shank part (3) and ends at a distance from the inwardly pointing lip (4), wherein the expansion region (7) extends over at least part of a lateral surface circumference (8).

2. Rubber teat-cup liner according to Patent Claim 1, **characterized in that** the lateral surface (5) has first indentations (10) in the expansion region (7), which first indentations, when viewed in the circumferential direction, are spaced apart from one another, wherein the first indentations (10) are directed inwardly from an expansion region outside circumference (12), wherein the expansion region (7) has an expansion region outside surface (11) and wherein each first indentation (10) has a first indentation surface (14) and wherein a ratio of the sum of all the first indentation surfaces (14) to the expansion region outside surface (11) is less than or equal to one.

3. Rubber teat-cup liner according to Patent Claim 2, **characterized in that**, at least in the expansion region (7), the lateral surface (5) has a substantially constant lateral surface thickness (18), wherein each first indentation (10) has a first depth (19), wherein a ratio of the first depth (19) to the lateral surface thickness (18) is less than or equal to one.

4. Rubber teat-cup liner according to Patent Claim 2, **characterized in that**, at least in the expansion region (7), the lateral surface (5) has a substantially constant lateral surface thickness (18), wherein each first indentation (10) has a first depth (19), wherein a ratio of the first depth (19) to the lateral surface thickness (18) is greater than one.

5. Rubber teat-cup liner according to one of Patent Claims 2 to 4, **characterized in that** each first indentation (10) has a first depth (19) and the lip (4) has a lip depth (21), wherein a ratio of the first depth (19) to the lip depth (21) is less than or equal to one.

6. Rubber teat-cup liner according to one of Patent Claims 2 to 5, **characterized in that** the head part (2) has a head part length (9) and each first indentation (10) has a first indentation length (22), wherein a ratio of the first indentation length (22) to the head part length (9) is less than or equal to one.

7. Rubber teat-cup liner according to one of Patent Claims 2 to 6, **characterized in that** each first indentation (10) has a first indentation length (22) and the expansion region (7) has an expansion region length (24), wherein a ratio of the first indentation length (22) to the expansion region length (24) is less than or equal to one.

8. Rubber teat-cup liner according to one of Patent Claims 2 to 7, **characterized in that** the first indentations (10) are arranged equidistantly with respect to one another in the circumferential direction.

9. Rubber teat-cup liner according to one of the preceding patent claims, **characterized in that** the lateral surface (5) has second indentations (13) in the expansion region (7), which second indentations, when viewed in the circumferential direction, are spaced apart from one another, wherein the second indentations (13) are directed outwardly from an expansion region inside circumference (15), wherein the expansion region (7) has an expansion region inside surface (16) and wherein each second indentation (13) has a second indentation surface (17) and wherein a ratio of the sum of all the second indentation surfaces (17) to the expansion region inside surface (15) is less than or equal to one.

10. Rubber teat-cup liner according to Patent Claim 9, **characterized in that**, at least in the expansion region (7), the lateral surface (5) has a substantially constant lateral surface thickness (18), wherein each second indentation (13) has a second depth (20), wherein a ratio of the second depth (20) to the lateral surface thickness (18) is less than or equal to one.

11. Rubber teat-cup liner according to Patent Claim 9, **characterized in that**, at least in the expansion region (7), the lateral surface (5) has a substantially constant lateral surface thickness (18), wherein each second indentation (10) has a second depth (20), wherein a ratio of the second depth (20) to the lateral surface thickness (18) is greater than one.

12. Rubber teat-cup liner according to one of Patent Claims 9 to 11, **characterized in that** each second indentation (13) has a second depth (20) and the lip (4) has a lip depth (21), wherein a ratio of the second depth (20) to the lip depth (21) is less than or equal to one.

13. Rubber teat-cup liner according to one of Patent Claims 9 to 12, **characterized in that** the head part (2) has a head part length (9) and each second indentation (13) has a second indentation length (23), wherein a ratio of the second indentation length (23) to the head part length (9) is less than or equal to one.

14. Rubber teat-cup liner according to one of Patent Claims 9 to 13, **characterized in that** each second indentation (13) has a second indentation length (23) and the expansion region (7) has an expansion region length (24), wherein a ratio of the second indentation length (23) to the expansion region length (24) is less than or equal to one.

15. Rubber teat-cup liner according to one of Patent Claims 9 to 14, **characterized in that** the second indentations (13) are arranged equidistantly with respect to one another in the circumferential direction.

16. Rubber teat-cup liner according to one of the preceding patent claims, **characterized in that**, at least in the expansion region (7), the lateral surface (5) has a substantially constant lateral surface thickness (18).

17. Rubber teat-cup liner according to one of the preceding patent claims, **characterized in that** the shank part (3) is formed in one piece with a short milk tube (19) at an end opposite from the head part (2).

18. Teat cup (26) having a rubber teat-cup liner (1) with a head part (2) and a shank part (3) which is connected to the head part (2), wherein the head part (2) has a lateral surface (5) and an insertion opening (6) for a teat of an animal, wherein the insertion opening (6) is delimited by an inwardly pointing lip (4), wherein the lateral surface (5) has an expansion region (7) which is formed with an undulatory cross section, **characterized in that** the expansion region (7), when viewed in the longitudinal direction, proceeding from the shank part (3) begins at a distance from the shank part (3) and ends at a distance from the inwardly pointing lip (4), wherein the expansion region (7) extends over at least part of a lateral surface circumference (8).

19. Teat cup according to Patent Claim 18, wherein the rubber teat-cup liner (1) is realized according to one of Patent Claims 2 to 17.

20. Milking cluster (27) with a milking claw (28) and at least two teat cups (26), wherein at least one of the teat cups (26) is realized with a rubber teat-cup liner (1) with a head part (2) and a shank part (3) which is connected to the head part (2), wherein the head part (2) has a lateral surface (5) and an insertion opening (6) for a teat of an animal, wherein the insertion opening (6) is delimited by an inwardly pointing lip (4), wherein the lateral surface (5) has an expansion region (7) which is formed with an undulatory cross section, **characterized in that** the expansion region (7), when viewed in the longitudinal direction, proceeding from the shank part (3) begins at a distance from the shank part (3) and ends at a distance from the inwardly pointing lip (4), wherein the expansion region (7) extends over at least part of a lateral surface circumference (8).

21. Milking cluster according to Patent Claim 20, wherein the rubber teat-cup liner (1) is realized according to one of Patent Claims 2 to 17.

## Revendications

1. Manchon trayeur (1) comprenant une partie de tête (2) et une partie de tige (3) connectée à la partie de tête (2), la partie de tête (2) ayant une enveloppe (5) et une ouverture d'introduction (6) pour une mamelle d'un animal, l'ouverture d'introduction (6) étant limitée par une lèvre (4) orientée vers l'intérieur, l'enveloppe (5) présentant une région étirable (7) sous forme ondulée en section transversale, **caractérisé en ce que** la région étirable (7), vu dans la direction longitudinale depuis la partie de tige (3), commence à distance de la partie de tige (3) et se termine à distance de la lèvre (4) orientée vers l'intérieur, la région étirable (7) s'étendant sur au moins une partie d'une périphérie d'enveloppe (8).

2. Manchon trayeur selon la revendication 1, **caractérisé en ce que** l'enveloppe (5) présente, dans la région étirable (7), des premiers renfoncements (10) qui, vu dans la direction périphérique, sont espacés les uns des autres, les premiers renfoncements (10) étant orientés vers l'intérieur depuis une périphérie extérieure de la région étirable (12), la région étirable (7) présentant une surface extérieure de région étirable (11) et chaque premier renfoncement (10) présentant une première surface de renfoncement (14) et un rapport de la somme de toutes les premières surfaces de renfoncements (14) à la surface extérieure de région étirable (11) étant inférieur ou égal à 1.

3. Manchon trayeur selon la revendication 2, **caractérisé en ce que** l'enveloppe (5), au moins dans la région étirable (7), présente une épaisseur d'enveloppe (18) essentiellement constante, chaque premier renfoncement (10) présentant une première profondeur (19), un rapport de la première profondeur (19) à l'épaisseur d'enveloppe (18) étant inférieur ou égal à 1.

4. Manchon trayeur selon la revendication 2, **caractérisé en ce que** l'enveloppe (5), au moins dans la région étirable (7), présente une épaisseur d'enveloppe (18) essentiellement constante, chaque premier renfoncement (10) ayant une première profondeur (19), un rapport de la première profondeur (19) à l'épaisseur d'enveloppe (18) étant supérieur à 1.

5. Manchon trayeur selon l'une quelconque des revendications 2 à 4, **caractérisé en ce que** chaque premier renfoncement (10) présente une première profondeur (19) et la lèvre (4) présente une profondeur de lèvre (21), un rapport de la première profondeur (19) à la profondeur de lèvre (21) étant inférieur ou égal à 1.

6. Manchon trayeur selon l'une quelconque des revendications 2 à 5, **caractérisé en ce que** la partie de tête (2) présente une longueur de partie de tête (9) et chaque premier renfoncement (10) présente une première longueur de renfoncement (22), un rapport de la première longueur de renfoncement (22) à la longueur de partie de tête (9) étant inférieur ou égal à 1.

7. Manchon trayeur selon l'une quelconque des revendications 2 à 6, **caractérisé en ce que** chaque premier renfoncement (10) présente une première longueur de renfoncement (22) et la région étirable (7) présente une longueur de région étirable (24), un rapport de la première longueur de renfoncement (22) à la longueur de région étirable (24) étant inférieur ou égal à 1.

8. Manchon trayeur selon l'une quelconque des revendications 2 à 7, **caractérisé en ce que** les premiers renfoncements (10) sont disposés de manière équidistante les uns par rapport aux autres dans la direction périphérique.

9. Manchon trayeur selon l'une quelconque des revendications précédentes, **caractérisé en ce que** l'enveloppe (5) présente, dans la région étirable (7), des deuxièmes renfoncements (13) qui, vu dans la direction périphérique, sont espacés les uns des autres, les deuxièmes renfoncements (13) étant orientés depuis une périphérie intérieure de région étirable (15) vers l'extérieur, la région étirable (7) ayant une surface intérieure de région étirable (16) et chaque deuxième renfoncement (13) ayant une deuxième surface de renfoncement (17) et un rapport de la somme de toutes les deuxièmes surfaces de renfoncement (17) à la surface intérieure de région étirable (15) étant inférieur ou égal à 1.

10. Manchon trayeur selon la revendication 9, **caractérisé en ce que** l'enveloppe (5), au moins dans la région étirable (7), présente une épaisseur d'enveloppe (18) essentiellement constante, chaque deuxième renfoncement (13) ayant une deuxième profondeur (20), un rapport de la deuxième profondeur (20) à l'épaisseur d'enveloppe (18) étant inférieur ou égal à 1.

11. Manchon trayeur selon la revendication 9, **caractérisé en ce que** l'enveloppe (5), au moins dans la région étirable (7), présente une épaisseur d'enveloppe (18) essentiellement constante, chaque deuxième renfoncement (10) ayant une deuxième profondeur (20), un rapport de la deuxième profondeur (20) à l'épaisseur d'enveloppe (18) étant supérieur à 1.

12. Manchon trayeur selon l'une quelconque des revendications 9 à 11, **caractérisé en ce que** chaque deuxième renfoncement (13) a une deuxième profondeur (20) et la lèvre (4) a une profondeur de lèvre (21), un rapport de la deuxième profondeur (20) à la profondeur de lèvre (21) étant inférieur ou égal à 1.

13. Manchon trayeur selon l'une quelconque des revendications 9 à 12, **caractérisé en ce que** la partie de tête (2) a une longueur de partie de tête (9) et chaque deuxième renfoncement (13) a une deuxième longueur de renfoncement (23), un rapport de la deuxième longueur de renfoncement (23) à la longueur de partie de tête (9) étant inférieur ou égal à 1.

14. Manchon trayeur selon l'une quelconque des revendications 9 à 13, **caractérisé en ce que** chaque deuxième renfoncement (13) a une deuxième longueur de renfoncement (23) et la région étirable (7) a une longueur de région étirable (24), un rapport de la deuxième longueur de renfoncement (23) à la longueur de région étirable (24) étant inférieur ou égal à 1.

15. Manchon trayeur selon l'une quelconque des revendications 9 à 14, **caractérisé en ce que** les deuxièmes renfoncements (13) sont disposés de manière équidistante les uns par rapport aux autres dans la direction périphérique.

16. Manchon trayeur selon l'une quelconque des revendications précédentes, **caractérisé en ce que** l'enveloppe (5), au moins dans la région étirable (7), présente une épaisseur d'enveloppe (18) essentiellement constante.

17. Manchon trayeur selon l'une quelconque des revendications précédentes, **caractérisé en ce que** la partie de tige (3), au niveau d'une extrémité opposée à la partie de tête (2), est formée d'une seule pièce avec un tuyau à lait court (19).

18. Gobelet trayeur (26) comprenant un manchon trayeur (1) avec une partie de tête (2) et une partie de tige (3) connectée à la partie de tête (2), la partie de tête (2) ayant une enveloppe (5) et une ouverture d'introduction (6) pour une mamelle d'un animal, l'ouverture d'introduction (6) étant limitée par une lèvre (4) orientée vers l'intérieur, l'enveloppe (5) présentant une région étirable (7) sous forme ondulée en section transversale, **caractérisé en ce que** la région étirable (7), vu dans la direction longitudinale depuis la partie de tige (3), commence à distance de la partie de tige (3) et se termine à distance de la lèvre (4) orientée vers l'intérieur, la région étirable (7) s'étendant sur au moins une partie d'une périphérie d'enveloppe (8).

19. Gobelet trayeur selon la revendication 18, dans lequel le manchon trayeur (1) est réalisé selon l'une quelconque des revendications 2 à 17.

20. Unité de traite (27) comprenant une pièce de collecte de lait (28) et au moins deux gobelets trayeurs (26), au moins l'un des gobelets trayeurs (26) étant réalisé avec un manchon trayeur (1) avec une partie de tête (2) et une partie de tige (3) connectée à la partie de tête (2), la partie de tête (2) ayant une enveloppe (5) et une ouverture d'introduction (6) pour une mamelle d'un animal, l'ouverture d'introduction (6) étant limitée par une lèvre (4) orientée vers l'intérieur, l'enveloppe (5) présentant une région étirable (7) sous forme ondulée en section transversale, **caractérisée en ce que** la région étirable (7), vu dans la direction longitudinale depuis la partie de tige (3), commence à distance de la partie de tige (3) et se termine à distance de la lèvre (4) orientée vers l'intérieur, la région étirable (7) s'étendant sur au moins une partie d'une périphérie d'enveloppe (8).

21. Unité de traite selon la revendication 20, dans laquelle le manchon trayeur (1) est réalisé selon l'une21. Unité de traite selon la revendication 20, dans laquelle le manchon trayeur (1) est réalisé selon l'une quelconque des revendications 2 à 17.
